# EUROPEAN PATENT SPECIFICATION

(11) **EP 1 254 008 B1**
(45) Date of publication and mention of the grant of the patent: **17.08.2005**
(21) Application number: 01909716.1
(22) Date of filing: 01.02.2001
(51) Int. Cl.: B29C 47/10, B29C 47/40, B29C 47/58, B32B 31/30, B29K 23/00

(54) **METHOD FOR MANUFACTURING ANTI-CRASH PANELS AND APPARATUS FOR CARRYING OUT THE METHOD**
VERFAHREN ZUM HERSTELLEN VON AUFPRALLSCHUTZPANEELEN UND VORRICHTUNG ZUM DURCHFÜHREN DIESES VERFAHRENS
PROCEDE DE FABRICATION DE PANNEAUX ANTI-COLLISION ET APPAREIL PERMETTANT DE METTRE EN OEUVRE LEDIT PROCEDE

(30) Priority: 08.02.2000 IT MI000204
(43) Date of publication of application: 06.11.2002
(73) Proprietor: Sand S.R.L., 20063 Cernusco Sul Naviglio (IT)
(72) Inventor: VANONI, Massimiliano, I-21040 Sumirago (IT)
(74) Representative: Modiano, Guido, Dr.-Ing.
(86) International application number: PCT/EP2001/001061
(87) International publication number: WO 2001/058665

(56) References cited:
- EP-A- 0 292 584
- EP-A- 0 319 589
- EP-A- 0 426 619
- EP-A- 0 654 341
- EP-A- 0 782 909
- DE-A- 3 207 432
- DE-A- 4 016 410
- DE-U- 6 906 813
- FR-A- 2 564 374
- GB-A- 840 512
- GB-A- 2 316 645
- US-A- 5 185 117

## Description

### Technical field

The present invention relates to a method for manufacturing anti-crash panels, to the apparatus for carrying out the method, and to the panel manufactured thereby.

### Background art

It is known that in the manufacture of anti-crash panels it is necessary to be able to arrange, inside the panel, synthetic or vegetable fibers which have a structural function and thus increase the mechanical strength of the panel.

For this purpose, it would be convenient to have relatively long fibers, which of course increase this kind of strength; with currently used solutions, which entail mixing the thermoplastic resin with the fillers and then performing extrusion, the fibers are inevitably broken and shredded, with a consequent significant decrease in mechanical strength.

The single step for mixing the thermoplastic resin and the vegetable or mineral filler can currently be performed with granular materials, such as wood flour or calcium carbonate or talc, thus obtaining a product which does not have the desired mechanical strength characteristics.

Documents US-A-5 185 117 and EP-A-0 292 584 teach compounding extruders for thermoplastic resins. Document EP-A-0 654 341 teaches a method to produce fibre-reinforced thermoplastics on a molding press.

### Disclosure of the Invention

The aim of the invention is to solve the above-noted problem, by providing a method and an apparatus for obtaining essentially composite structures having a substantially uniform thickness and being substantially flat.

Such structures can be hot-molded again after manufacturing and can be used as panels to form sturdy, structural finished items, such as for example the internal paneling of cars, fruit crates, underbodies for trucks and containers and various items.

Within this aim, an object of the invention is to provide a method and an apparatus which allow to include relatively long vegetable or mineral fibers, even of different sizes, without encountering problems in feeding the extruder.

Another object of the present invention is to provide a method which allows to avoid damaging the initial filamentous structure of the fibers, thus obtaining an end product particularly valid and having anti-crash properties, with greater mechanical strength due to the overlapping of the fibers.

Another object of the present invention is to provide a panel which can be obtained starting from commonly commercially available elements and materials and is also competitive from a merely economical point of view.

This aim and these and other objects which will become better apparent hereinafter are achieved by an apparatus and a method for manufacturing anti-crash panels, according to the invention, as set forth in the claims.

### Brief description of the drawings

Further characteristics and advantages will become better apparent from the following description of a preferred but not exclusive embodiment of an apparatus for manufacturing anti-crash panels according to the invention, illustrated only by way of non-limitative example in the accompanying drawings, wherein:
Figure 1 is a schematic partially sectional elevation view of the apparatus according to the invention;
Figure 2 is a schematic plan view of the single-screw extruder assembly;
Figure 3 is a sectional view, taken along the line III-III of Figure 2;
Figure 4 is a sectional view, taken along the line IV-IV of Figure 3;
Figure 5 is a plan view of a double-screw extruder assembly;

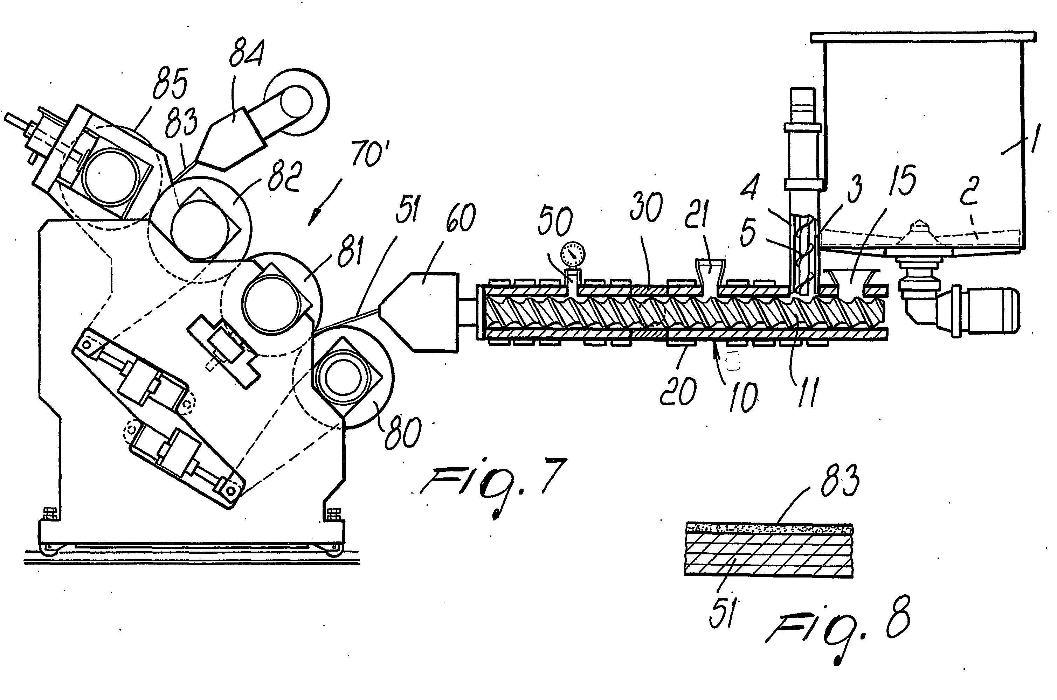

Figure 6 is a sectional view, taken along the line VI-VI of Figure 5;
Figure 7 is an elevation view of the apparatus for manufacturing a composite panel;
Figure 8 is a schematic sectional view of a panel that can be obtained.

### Ways of Carrying out the Invention

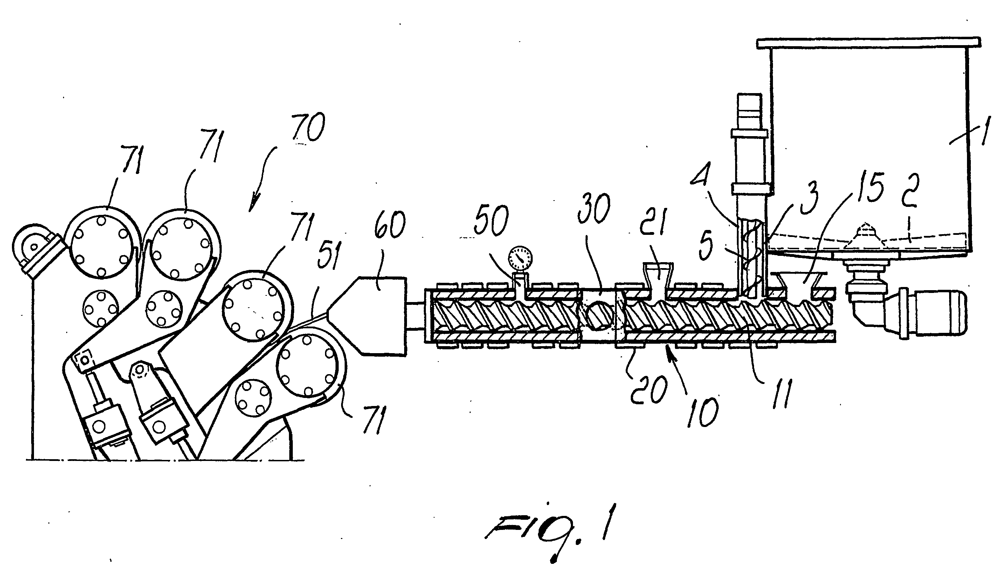

With reference to the figures, and particularly to Figure 1, the apparatus for manufacturing anti-crash panels comprises a reservoir 1 for containing long vegetable or synthetic fibers which preferably have a length between for example 10 and 150 mm.

The long filamentous vegetable fiber (coconut, jute, hemp, linen, cotton, kapok, sugar cane, and so forth) or synthetic mineral fiber (glass fiber, carbon fiber and the like) or natural mineral fiber, can be included in the mixture in a percentage by weight between 10 and 45%.

On the bottom of the reservoir 1 there is a rotating blade 2 for conveying the fibers toward a lateral opening 3, where there is a vertical transfer duct 4 in which a screw feeder 5 acts; said feeder is adapted to perform a controlled feeding of the long fibers.

The duct 4 leads into an extruder assembly, generally designated by the reference numeral 10, inside which, with reference to Figure 1, there is a single-screw feeder 11 or optionally, with reference to Figure 5, there is a double-screw feeder 12 with contrarotating or corotating screws.

An inlet 15 is provided on the extruder assembly 10, upstream of the input region of the duct 4, for the introduction of waste and scrap from previously manufactured panels which can be fed by a corresponding hopper.

The fibers, together with any scrap, are subjected to heating by means of a heater 20, and there is also a degassing vent 21 which is adapted to allow any generated gases to vent outside.

Downstream of the free degassing vent 21 there is a region for wetting the fiber with thermoplastic resin, designated by the reference numeral 30. In this region, a mixture of thermoplastic resin, preferably a polyolefin resin, in practice wets the fibers and any scrap and includes the long vegetable or mineral fibers, possibly having uneven sizes and a relatively high moisture content.

In practice, the long vegetable or mineral fiber, fed by forced and controlled dosage, is completely wet and covered with thermoplastic material injected in the melted state under pressure over a long, controlled and balanced region with maximum wettability surface, so as to leave practically intact the initial filamentous structure, which remains substantially unchanged, even after the wetting step, which in practice performs a mixing; during this step, the region affected by the extruder is not under pressure and therefore the gases are evacuated by way of the free degassing vent 21.

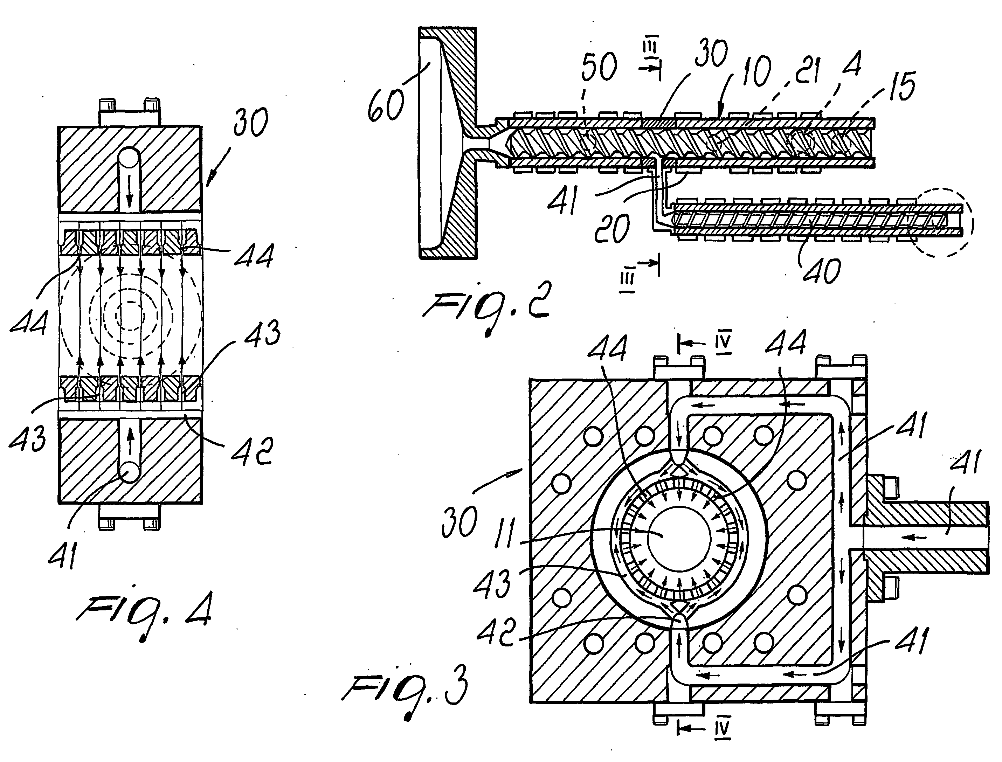

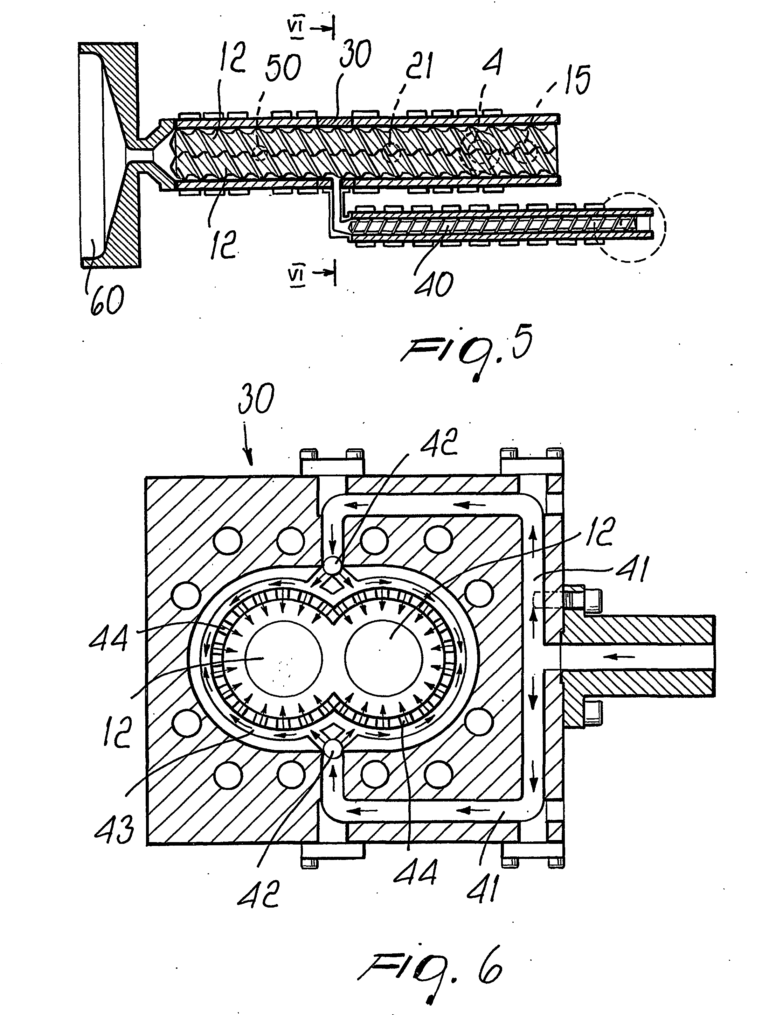

As shown in Figures 3 and 4, the wetting region 30 provides for the conveyance of the polyolefin thermoplastic material in the melted state, by means of an extruder 40 for the plastic material, which conveys said plastic material into an input channel 41 introducing it in a distribution channel 42, which in turn distributes the melted plastic by means of a plurality of annular channels 43 ending with openings 44, which fully surround the region for the passage of the fibers fed by the single- or double-screw extruder.

The wetting region has a certain length so that in practice it is possible to introduce the thermoplastic material on the fibers conveyed by the extruder and distributed in a metered amount.

An integral mixture is thus formed in which the fiber is wet and fully coated by the thermoplastic polymer, maintaining the length of the fiber intact.

Advantageously, the wetting process occurs in a relatively low-pressure environment, so that any formation of gas is forced to flow backward toward the free degassing vent 21, without being embedded in the formed mixture.

The resulting mixture passes through a vacuum degassing region 50 which fully eliminates any residue of gases and monomers that might still be present.

The mixture, in the form of a pasty material, is then extruded by means of an extrusion nozzle 60 which places the material on a calender, generally designated by the reference numeral 70. The calender 70 is advantageously of the type with four rolls 71, receives the pasty and soft material that leaves the extrusion nozzle 60 and obtains a layer 51 having a uniform and regular thickness.

According to a different embodiment, it is possible to apply to the resulting panel a covering layer made of polyolefin material.

For this purpose, as shown in Figure 7, there is a calender 70' which has a first roll 80 and said second roll 81 for compressing the melted mass that forms the panel 51 and a third roll 82 for gauging the panel, obtaining the intended thickness.

A layer of polyolefin material 83 is applied on the third roll or cylinder 82 by means of an extrusion head 84 with subsequent gauging by means of the fourth cylinder 85, thus allowing to obtain a panel which has a soft, smooth or embossed outer surface.

The panel obtained as shown in Figure 8 is entirely recyclable, since both of the layers that compose it, i.e., the layer 51 obtained from the long fibers mixed with the thermoplastic resin and the covering layer 83, are both obtained from polyolefin resins.

From the above description it is thus evident that the invention achieves the intended aim and objects, and in particular the fact is stressed that a method and an apparatus are provided which allow to obtain anti-crash panels which can have high-level mechanical characteristics and further allowing full recycling.

The invention thus conceived is susceptible of numerous modifications and variations, all of which are within the scope of the appended claims.

All the details may furthermore be replaced with other technically equivalent elements.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for manufacturing anti-crash panels, comprising: an extruder assembly (10) for forming and extruding a mixture of long filamentous fibers and thermoplastic material; a reservoir (1) for feeding long filamentous fibers which is connected to a fiber feeding region of said extruder assembly (10); an extruder (40) for thermoplastic material connected to a central portion of said extruder assembly (10), downstream of the fiber feeding region; an extrusion nozzle (60) being arranged at the output of said extruder assembly (10), a wetting region (30), provided on said extruder assembly (10) for connecting said extruder (40) for thermoplastic material to said extruder assembly, said wetting region (30) comprising an input channel (41) for the thermoplastic material, **characterized in that** a distribution channel (42) is connected to said input channel (41), and a plurality of annular channels (43) a connected to said distribution channel (42) and are ending with openings (44) which surround a passage region for the passage of the fibers to provide a complete wetting of said long filamentous fibers with thermoplastic material introduced in said distribution channel (42) and distributed through said plurality of annular channels (43).

2. The apparatus according to claim 1, **characterized in that** said reservoir (1) is internally provided with a rotating blade (2) for conveying the fibers toward a lateral opening (3) where a vertical transfer duct (4) is arranged, a feeder (5) acting in said duct, said duct (4) leading into said extruder assembly (10).

3. The apparatus according to one or more of the preceding claims, **characterized in that** it comprises, on said extruder assembly (10), upstream of the region for introducing said long filamentous fibers, an inlet (15) for introducing waste and scrap from previously manufactured panels.

4. The apparatus according to one or more of the preceding claims, **characterized in that** it comprises, on said extruder assembly (10), downstream of the region for the connection of said duct (4), a heater (20) for controlling the humidity and temperature of said fibers.

5. The apparatus according to one or more of the preceding claims, **characterized in that** said extruder assembly (10) is of the single-screw type.

6. The apparatus according to one or more of the preceding claims, **characterized in that** said extruder assembly (10) is of the type with two corotating or contrarotating screws (12).

7. The apparatus according to one or more of the preceding claims, **characterized in that** it further comprises a free degassing vent (21), said wetting region (30) of said extruder assembly being a low-pressure environment and said free degassing vent (21) being arranged at said extruder assembly (10) upstream with respect to said wetting region (30) in order to allow evacuation of any generated gas.

8. The apparatus according to any of the preceding claims, **characterized in that** it is provided with a calender (70, 70') arranged so as to receive the mixture extruded through said nozzle (60) to obtain a layer (51) of uniform thickness.

9. The apparatus according to one or more of the preceding claims, **characterized in that** it comprises a vacuum degassing region (5) on said extruder assembly (10), downstream of the wetting region (30) for connection to said extruder of the thermoplastic material (40).

10. The apparatus according to claim 8, **characterized in that** it is further provided with a head (84) for extruding a covering layer (83) made of polyolefin material, said calender (70') having a first roll (80) and a second roll (81) for compressing the melted mixture that provides said layer (51), and a third roll (82) for gauging the layer (51), and a fourth roll (85), said head (84) being adapted to couple to said layer said covering layer (83) before insertion through said third roll (82) and a fourth roll (85).

11. A method for manufacturing anti-crash panels from a mixture of thermoplastic material and long filamentous fibers, comprising the steps of:
a) providing an apparatus comprising an extruder assembly (10) for forming and extruding a mixture of long filamentous fibers and thermoplastic material, which has an extrusion nozzle (60) located in output, a fiber feeding region with a fiber feeding reservoir (1) connected thereto and a central portion located downstream of the fiber feeding region to which an extruder (40) is connected and a wetting region (30) to which said extruder (40) for thermoplastic material is connected, the wetting region (30) being provided with an input channel (41) for the thermoplastic material;
b) conveying from said reservoir (1) into said extruder assembly (10) a metered amount of fibers having a long filamentous structure;
c) conveying thermoplastic material from said extruder (40) through said central portion;
d) forming a mixture of long filamentous fibers and thermoplastic material; and
e) extruding the mixture through a nozzle (60) of the extruder assembly (10),
**characterized in that** said apparatus comprises:
a distribution channel (42) connected to said input channel (41), and a plurality of annular channels (43) connected to said distribution channel (42) and ending with openings (44) which surround a region for the passage of the fibers of the extruder assembly;
and between the steps c) and d) the step of
f) wetting completely said fibers, at said wetting region (30), by introducing in said distribution channel (42) and distributing through said plurality of annular channels (43) the melted thermoplastic material conveyed by said extruder (40) to obtain the mixture of thermoplastic material and fibers with the fibers fully wet and the initial long filamentous structure thereof maintained intact.

12. The method according to claim 11, **characterized in that** it comprises a step of introducing waste or scrap from previously manufactured panels into said metered amount of fibers.

13. The method according to any of the claims 11 or 12, **characterized in that** it comprises a step of heating said fibers and said waste or scrap, in order to control humidity and temperature.

14. The method according to one or more of the claims 11-13, **characterized in that** said thermoplastic material a polyolefin resin.

15. The method according to one or more of the claims 11-14, **characterized in that** said thermoplastic material is introduced on the outer surface of said fibers conveyed by said extruder assembly, with inclusion of the fibers in said thermoplastic material.

16. The method according to any of the claims 11-15, **characterized in that** it further comprises a calendering step for calendering the mixture extruded by said extruder assembly to obtain a sheet-like element having a constant thickness.

17. The method according to claim 16, **characterized in that** it provides for the application, on the sheet-like element having a constant thickness, of a covering layer made of a material which is compatible with the thermoplastic resin.

## Patentansprüche

1. Vorrichtung zur Herstellung von Aufprallschutzpaneelen, umfassend: eine Extruderanordnung (10) zum Bilden und Extrudieren einer Mischung von langen faserförmigen Fasern und thermoplastischem Material; einen Speicher (1) zum Zuführen von langen faserförmigen Fasern, der mit einem Faserzufuhrbereich der Extruderanordnung (10) verbunden ist; einen Extruder (40) für thermoplastisches Material, der stromabwärts vom Faserzufuhrbereich mit einem mittleren Teil der Extruderanordnung (10) verbunden ist; wobei eine Extrusionsdüse (60) am Ausgang der Extruderanordnung (10) angeordnet ist; einen auf der Extruderanordnung (10) vorgesehenen Benetzungsbereich (30) zum Verbinden des Extruders (40) für thermoplastisches Material mit der Extruderanordnung, wobei der Benetzungsbereich (30) einen Eingabekanal (41) für das thermoplastische Material umfasst, **dadurch gekennzeichnet, dass** ein Verteilungskanal (42) mit dem Eingabekanal (41) verbunden ist, und eine Mehrzahl von Ringkanälen (43) mit dem Verteilungskanal (42) verbunden sind und mit Öffnungen (44) enden, welche einen Durchtrittsbereich für den Hindurchtritt der Fasern umgeben, um für eine vollständige Benetzung der langen faserförmigen Fasern mit in den Verteilungskanal (42) zugeführtem und durch die Mehrzahl von Ringkanälen (43) verteiltem thermoplastischem Material zu sorgen.

2. Vorrichtung nach Anspruch 1, **dadurch gekennzeichnet, dass** der Speicher (1) im Inneren mit einem rotierenden Messer (2) versehen ist, um die Fasern zu einer seitlichen Öffnung (3) hin zu fördern, wo ein vertikaler Transportkanal (4) angeordnet ist, wobei in dem Kanal eine Zufuhrvorrichtung (5) wirkt, wobei der Kanal (4) in die Extruderanordnung (10) führt.

3. Vorrichtung nach einem oder mehreren der vorangehenden Ansprüche, **dadurch gekennzeichnet, dass** sie auf der Extruderanordnung (10) stromaufwärts von dem Bereich zum Zuführen der langen faserförmigen Fasern einen Einlass (15) zum Zuführen von Abfall und Ausschuss von zuvor hergestellten Paneelen umfasst.

4. Vorrichtung nach einem oder mehreren der vorangehenden Ansprüche, **dadurch gekennzeichnet, dass** sie auf der Extruderanordnung (10) stromabwärts von dem Bereich zur Verbindung des Kanals (4) eine Heizung (20) zur Steuerung der Feuchtigkeit und Temperatur der Fasern umfasst.

5. Vorrichtung nach einem oder mehren der vorangehenden Ansprüche, **dadurch gekennzeichnet, dass** die Extruderanordnung (10) vom Einzel-Schnecken-Typ ist.

6. Vorrichtung nach einem oder mehreren der vorangehenden Ansprüche, **dadurch gekennzeichnet, dass** die Extruderanordnung (10) vom Typ mit zwei sich gleichsinnig oder gegensinnig drehenden Schnecken (12) ist.

7. Vorrichtung nach einem oder mehreren der vorangehenden Ansprüche, **dadurch gekennzeichnet, dass** sie weiter eine freie Entgasungsöffnung (21) umfasst, wobei der Benetzungsbereich (30) der Extruderanordnung eine Niederdruckumgebung ist, und die freie Entgasungsöffnung (21) an der Extruderanordnung (10) stromaufwärts in Bezug zum Benetzungsbereich (30) angeordnet ist, um ein Abführen von jeglichem erzeugtem Gas zu erlauben.

8. Vorrichtung nach einem der vorangehenden Ansprüche, **dadurch gekennzeichnet, dass** sie mit einem Kalander (70, 70') versehen ist, der so angeordnet ist, dass er die durch die Düse (60) extrudierte Mischung empfängt, um eine Schicht (51) von gleichförmiger Dicke zu erhalten.

9. Vorrichtung nach einem oder mehreren der vorangehenden Ansprüche, **dadurch gekennzeichnet, dass** sie stromabwärts vom Benetzungsbereich (30) einen Unterdruckentgasungsbereich (5) auf der Extruderanordnung (10) zur Verbindung mit dem Extruder für das thermoplastische Material (40) umfasst.

10. Vorrichtung nach Anspruch 8, **dadurch gekennzeichnet, dass** sie weiter mit einem Kopf (84) zum Extrudieren einer aus Polyolefinmaterial bestehenden Deckschicht (83) versehen ist, wobei der Kalander (70') eine erste Walze (80) und eine zweite Walze (81) zum Zusammenpressen der geschmolzenen Mischung aufweist, welche die Schicht (51) liefert, sowie eine dritte Walze (82) zur Kalibrierung der Schicht (51) und eine vierte Walze (85), wobei der Kopf (84) angepasst ist, um vor dem Einführen durch die dritte Walze (82) und eine vierte Walze (85) die Deckschicht (83) mit der besagten Schicht zu verbinden.

11. Verfahren zur Herstellung von Aufprallschutzpaneelen aus einer Mischung von thermoplastischem Material und langen faserförmigen Fasern, umfassend die Schritte:
a) Bereitstellen einer Vorrichtung umfassend eine Extruderanordnung (10) zum Bilden und Extrudieren einer Mischung von langen faserförmigen Fasern und thermoplastischem Material, die eine am Ausgang angeordnete Extrusionsdüse (60), einen Faserzufuhrbereich mit einem damit verbundenen Faserzufuhrspeicher (1) und einen stromabwärts vom Faserzufuhrbereich angeordneten mittleren Teil aufweist, mit dem ein Extruder (40) verbunden ist, sowie einen Benetzungsbereich (30), mit dem der Extruder (40) für thermoplastisches Material verbunden ist, wobei der Benetzungsbereich (30) mit einem Eingabekanal (41) für das thermoplastische Material versehen ist;
b) Fördern einer dosierten Menge von Fasern mit einer langen faserförmigen Struktur aus dem Speicher (1) in die Extruderanordnung (10);
c) Fördern von thermoplastischem Material aus dem Extruder (40) durch den mittleren Teil;
d) Bilden einer Mischung von langen faserförmigen Fasern und thermoplastischem Material; und
e) Extrudieren der Mischung durch eine Düse (60) der Extruderanordnung (10),
**dadurch gekennzeichnet, dass** die Vorrichtung einen mit dem Einlasskanal (41) verbundenen Verteilungskanal (42) und eine Mehrzahl von mit dem Verteilungskanal (42) verbundenen und mit Öffnungen (44) endenden Ringkanälen (43) umfasst, die einen Bereich für den Hindurchtritt der Fasern der Extruderanordnung umgeben;
sowie zwischen den Schritten c) und d) den Schritt:
f) vollständiges Benetzen der Fasern am Benetzungsbereich (30) durch Zuführen des vom Extruder (40) geförderten geschmolzenen thermoplastischen Materials in den Verteilungskanal (42) und Verteilen desselben durch die Mehrzahl von Ringkanälen (43), um die Mischung von thermoplastischem Material und Fasern zu erhalten, wobei die Fasern vollständig benetzt und die ursprüngliche lange faserförmige Struktur derselben intakt erhalten wird.

12. Verfahren nach Anspruch 11, **dadurch gekennzeichnet, dass** es einen Schritt eines Zuführens von Abfall oder Ausschuss von zuvor hergestellten Paneelen in die dosierte Menge von Fasern umfasst.

13. Verfahren nach einem der Ansprüche 11 oder 12, **dadurch gekennzeichnet, dass** es einen Schritt eines Erwärmens der Fasern und des Abfalls oder Ausschusses umfasst, um Feuchtigkeit und Temperatur zu steuern.

14. Verfahren nach einem oder mehreren der Ansprüche 11 - 13, **dadurch gekennzeichnet, dass** das thermoplastische Material ein Polyolefinharz ist.

15. Verfahren nach einem oder mehreren der Ansprüche 11 - 14, **dadurch gekennzeichnet, dass** das thermoplastische Material auf die äußere Oberfläche der von der Extruderanordnung geförderten Fasern zugeführt wird, mit einem Einschluss der Fasern in das thermoplastische Material.

16. Verfahren nach einem der Ansprüche 11 - 15, **dadurch gekennzeichnet, dass** es weiter einen Kalandrierschritt zum Kalandrieren der von der Extruderanordnung extrudierten Mischung umfasst, um ein schichtartiges Element mit einer konstanten Dicke zu erhalten.

17. Verfahren nach Anspruch 16, **dadurch gekennzeichnet, dass** es das Aufbringen einer Deckschicht auf das schichtartige Element mit einem konstanten Dicke vorsieht, die aus einem Material hergestellt ist, das mit dem thermoplastischen Harz verträglich ist.

## Revendications

1. Appareil pour fabriquer des panneaux anti-collision, comprenant :
un ensemble d'extrusion (10) pour former et pour extruder un mélange de fibres filamenteuses longues et de matière thermoplastique ; un réservoir (1) pour alimenter des fibres filamenteuses longues, qui est connecté à une région d'alimentation de fibres dudit ensemble d'extrusion (10) ; une extrudeuse (40) pour matière thermoplastique, connectée à une partie centrale dudit ensemble d'extrusion (10) en aval de la région d'alimentation de fibres ; une buse d'extrusion (60) étant agencée à la sortie dudit ensemble d'extrusion (10), une région de mouillage (30) prévue sur ledit ensemble d'extrusion (10) pour connecter ladite extrudeuse (40) pour matière thermoplastique audit ensemble d'extrusion, ladite région de mouillage (30) comprenant un canal d'entrée (41) pour la matière thermoplastique ;
**caractérisé en ce qu'**un canal de distribution (42) est connecté audit canal d'entrée (41), et une pluralité de canaux annulaires (43) sont connectés audit canal de distribution (42) et se terminent par des ouvertures (44) qui entourent une région de passage pour le passage des fibres pour assurer un mouillage complet desdites fibres filamenteuses longues avec la matière thermoplastique introduite dans ledit canal de distribution (42) et distribuée via ladite pluralité de canaux annulaires (43).

2. Appareil selon la revendication 1, **caractérisé en ce que** ledit réservoir (1) est doté à l'intérieur d'une pale en rotation (2) pour convoyer les fibres vers une ouverture latérale (3) à laquelle est agencé un conduit de transfert vertical (4), un moyen d'alimentation (5) agissant dans ledit conduit, ledit conduit (4) menant vers ledit ensemble d'extrusion (10).

3. Appareil selon l'une ou plusieurs des revendications précédentes, **caractérisé en ce qu'**il comprend, sur ledit ensemble d'extrusion (10) et en amont de la région pour introduire lesdites fibres filamenteuses longues, une entrée (15) pour introduire des déchets et des rognures provenant de panneaux précédemment fabriqués.

4. Appareil selon l'une ou plusieurs des revendications précédentes, **caractérisé en ce qu'**il comprend, sur ledit ensemble d'extrusion (10) et en aval de la région pour la connexion dudit conduit (4), un moyen de chauffage (20) pour commander l'humidité et la température desdites fibres.

5. Appareil selon l'une ou plusieurs des revendications précédentes, **caractérisé en ce que** ledit ensemble d'extrusion (10) est du type à vis unique.

6. Appareil selon l'une ou plusieurs des revendications précédentes, **caractérisé en ce que** ledit ensemble d'extrusion (10) est du type à deux vis (12) en corotation ou en contrarotation.

7. Appareil selon l'une ou plusieurs des revendications précédentes, **caractérisé en ce qu'**il comprend en outre un évent de dégazage libre (21), ladite région de mouillage (30) dudit ensemble d'extrusion étant un environnement à basse pression et ledit évent de dégazage libre (21) étant agencé au niveau dudit ensemble d'extrusion (10) en amont par rapport à ladite région de mouillage (30) pour permettre l'évacuation de tout gaz généré.

8. Appareil selon l'une quelconque des revendications précédentes, **caractérisé en ce qu'**il est pourvu d'une calandre (70, 70') agencée pour recevoir le mélange extrudé à travers ladite buse (60) pour obtenir une couche (51) d'épaisseur uniforme.

9. Appareil selon l'une ou plusieurs des revendications précédentes, **caractérisé en ce qu'**il comprend une région de dégazage sous vide (5) sur ledit ensemble d'extrusion (10) en aval de la région de mouillage (30), pour la connexion à ladite extrudeuse de matière thermoplastique (40).

10. Appareil selon la revendication 8, **caractérisé en ce qu'**il est en outre pourvu d'une tête (84) pour extruder une couche de couverture (83) réalisée en matériau polyoléfine, ladite calandre (70') comprenant un premier rouleau (80) et un second rouleau (81) pour comprimer le mélange en fusion qui constitue ladite couche (51), et un troisième rouleau (82) pour calibrer la couche (51), et un quatrième rouleau (85), ladite tête (84) étant adaptée à accoupler ladite couche de couverture (83) sur ladite couche (51) avant introduction à travers ledit troisième rouleau (82) et ledit quatrième rouleau (85).

11. Procédé de fabrication de panneaux anti-collision à partir d'un mélange de matière thermoplastique et de fibres filamenteuses longues, comprenant les étapes consistant à :
a) procurer un appareil comprenant un ensemble d'extrusion (10) pour former et pour extruder un mélange de fibres filamenteuses longues et de matière thermoplastique, qui comprend une buse d'extrusion (60) située dans une sortie, une région d'alimentation de fibres avec un réservoir d'alimentation de fibres (1) connecté à celle-ci et une partie centrale située en aval de la région d'alimentation de fibres, à laquelle est connectée une extrudeuse (40), et une région de mouillage (30) à laquelle est connectée ladite extrudeuse (40) pour matière plastique, la région de mouillage (30) étant pourvue d'un canal d'entrée (41) pour la matière thermoplastique ;
b) convoyer depuis ledit réservoir (1) jusque dans ledit ensemble d'extrusion (10) une quantité dosée de fibres ayant une structure filamenteuse longue ;
c) convoyer une matière thermoplastique depuis ladite extrudeuse (40) via ladite partie centrale ;
d) former un mélange de fibres filamenteuses longues et de matière thermoplastique ; et
e) extruder le mélange à travers une buse (60) de l'ensemble d'extrusion (10),
**caractérisé en ce que** ledit appareil comprend :
un canal de distribution (42) connecté audit canal d'entrée (41), et une pluralité de canaux annulaires (43) connectés audit canal de distribution (42) et se terminant par des ouvertures (44) qui entourent une région pour le passage des fibres de l'ensemble d'extrusion ;
et qui comprend, entre les étapes c) et d), l'étape consistant à :
f) mouiller complètement lesdites fibres, au niveau de ladite région de mouillage (30), en introduisant dans ledit canal de distribution (42) et en distribuant via ladite pluralité de canaux annulaires (43) la matière thermoplastique en fusion convoyée par ladite extrudeuse (40) pour obtenir le mélange de matière thermoplastique et de fibres, dans lequel les fibres sont totalement mouillées et leur structure filamenteuse longue initiale est maintenue intacte.

12. Procédé selon la revendication 11, **caractérisé en ce qu'**il comprend une étape consistant à introduire des déchets ou des rognures provenant de panneaux précédemment fabriqués dans ladite quantité dosée de fibres.

13. Procédé selon l'une ou l'autre des revendications 11 et 12, **caractérisé en ce qu'**il comprend une étape consistant à chauffer lesdites fibres et lesdits déchets ou rognures, afin de commander l'humidité et la température.

14. Procédé selon l'une ou plusieurs des revendications 11 à 13, **caractérisé en ce que** ladite matière thermoplastique est une résine polyoléfine.

15. Procédé selon l'une ou plusieurs des revendications 11 à 14, **caractérisé en ce que** ladite matière thermoplastique est introduite sur la surface extérieure desdites fibres convoyées par ledit ensemble d'extrusion, avec inclusion des fibres dans ladite matière thermoplastique.

16. Procédé selon l'une quelconque des revendications 11 à 15, **caractérisé en ce qu'**il comprend en outre une étape de calandrage pour calandrer le mélange extrudé par ledit ensemble d'extrusion et obtenir un élément analogue à une feuille ayant une épaisseur constante.

17. Procédé selon la revendication 16, **caractérisé en ce qu'**il prévoit l'application, sur l'élément analogue à une feuille ayant une épaisseur constante, d'une couche de couverture produite en un matériau qui est compatible avec la résine thermoplastique.
